# EUROPEAN PATENT APPLICATION

(11) **EP 3 412 744 A1**
(43) Date of publication of application: **12.12.2018**
(21) Application number: 17188569.2
(22) Date of filing: 30.08.2017
(51) Int. Cl.: C09J 191/06, C09J 153/02, C09J 11/06, C08K 5/01, C08F 287/00

(54) **GEL COMPOSITION AND MANUFACTURING METHOD THEREOF, TEMPERED GLASS PROTECTIVE FILM AND ELECTRONIC DEVICE**

(30) Priority: 07.06.2017 CN 201710424339
(71) Applicant: Wu, Xiulan, Shenzhen City, Guangdong Province (CN)
(72) Inventor: WU, Xiulan, Guangdong Province (CN); WEN, Zhiguang, Jiangxi Province (CN)
(74) Representative: Keil & Schaafhausen Patent- und Rechtsanwälte PartGmbB

(57) **Abstract**

A gel composition, a manufacturing method thereof, a tempered glass protective film and an electronic device are provided. The gel composition is processed by mixing a thermoplastic elastomer and oil, heating and stirring, using mixer to plastify and performing vacuum defoaming. The gel composition of the present disclosure is soft, and of which the hardness is smaller than 10 and the elastic modulus is about 1.2 Gpa. The gel composition can be completely filled in between the tempered glass and the electronic visual display after applying the tempered glass on the electronic visual display, so as to achieve the complete adherence without any air bubbles.

## Description

### BACKGROUND

### 1. Technical Field

The present disclosure is related to a gel composition, in particular to a gel composition utilized for bonding a tempered glass to an electronic visual display, and a manufacturing method and applications thereof.

### 2. Description of Related Art

Thermoplastic elastomers (TPE), or thermoplastic rubbers (TPR), sometimes referred to as artificial rubbers or synthetic rubbers, not only retains excellent performances such as high elasticity, ageing-resistant and resistance to oil as the conventional vulcanized rubber by crosslinking, but is also more convenient and applicable to a wider range of processing methods, as with general plastics. Processing methods such as injection molding, extrusion process, and blow molding, etc., can be performed on thermoplastic elastomers, which can be 100% reused in secondary use by smashing the sprue corners, thereby simplifying the processing process and reducing costs. Hence, thermoplastic elastomers (TPE/TPR) have become the latest materials that replace the conventional rubber materials. With the above-mentioned advantages, thermoplastic elastomer products are environment friendly, nontoxic and have comfortable tactility and elegant appearance. In other words, TPE/TPR could be a novel synthetic material that is more humane and with better taste, and could be an Eco-friendly material complying with worldwide standards.

Thermoplastic elastomer is a novel polymer material which could be considered to be between rubber and plastic. Thermoplastic elastomer can not only be used to replace some rubbers, but also to modify the plastics. Due to its dual properties, thermoplastic elastomer can be widely applied in the rubber industry for producing housewares such as galoshes, tapes, etc., and industrial goods such as hoses, tapes, strips, plastic sheets, plastic parts and adhesives, etc. Meanwhile, the thermoplastic elastomers can replace rubbers to be widely applied in modifications of general engineering plastics such as PVC, PE, PP and PS, and even for engineering plastics such as PU, PA and CA.

With the rapid development of electronic devices, protective films specific to electronic devices have undergone rapid development as well. There is a need for developing a gel for adhering hot-bending tempered glass and electronic devices in the associated industry, and in particular to the art of hot-bending tempered glass protective film. However, due to technical restrictions in the art, the conventional hot-bended tempered glass cannot be perfectly flat after hot-bending, especially in the bending areas. Hence, the conventional gel used for the electronic visual display adhesion is silicone gel, which has low elasticity, high hardness, and lacks flexibility, resulting in air bubbles after the silicone gel is applied to the full visual display screen.

### SUMMARY

The object of the present disclosure is to provide a gel composition including a linear block copolymer and an adhesion enhancer with specific Rockwell hardness and elastic modulus, to be applied to the surface of tempered glasses, so as to achieve good attachment and not produce any air bubbles when applied in various temperature ranges.

In order to achieve the aforementioned object, according to one embodiment of the present disclosure, a gel composition for bonding a tempered glass to an electronic visual display is provided. The gel composition includes a linear block copolymer and an adhesion enhancer.

In addition, the linear block copolymer has a styrene-butadiene-styrene (SBS) block structure, wherein S is from 5% to 30% by weight of a block of polystyrene, B is from 70% to 95% by weight of a block of polybutadiene; and the weight ratio of the linear block copolymer and the adhesion enhancer is from 1:40 to 1:50.

Moreover, a Rockwell hardness of the gel composition is smaller than 10, and an elastic modulus thereof is from 0.8 to 1.5. Gpa.

Exemplarily, the adhesion enhancer is selected from a group consisting of white oil, naphthenic oil and hydrogenated naphthenic oil.

Exemplarily, the gel composition further includes butadiene and an additive.

Exemplarily, the additive is an antioxidant and/or an anti-ultraviolet agent.

Exemplarily, a mass percentage of the linear block copolymer is from 3% to 20%, a mass percentage of the adhesion enhancer is from 70% to 95%.

In order to achieve the aforementioned object, according to another embodiment of the present disclosure, a manufacturing method of gel composition is provided. The manufacturing method includes a step of mixing the linear block copolymer and the adhesion enhancer, a step of heating and stirring, a step of performing mixer to plastify and a step of vacuum defoaming.

In order to achieve the aforementioned object, according to still another embodiment of the present disclosure, a tempered glass protective film for full screen attachment is provided. The tempered glass protective film includes a tempered glass and a gel layer, which is composed of the gel composition of the present disclosure.

Exemplarily, the gel layer is directly coated on the surface of the tempered glass or a functional layer is disposed between the gel layer and the tempered glass, such as an organosilicon pressure-sensitive adhesive layer.

Exemplarily, the tempered glass protective film for full screen attachment further includes a peeling layer and/or a protective film.

In order to achieve the aforementioned object, according to another embodiment of the present disclosure, an electronic device including the gel composition or the tempered glass protective film for full screen attachment of the present disclosure is provided.

The gel composition of the present disclosure is manufactured by mixing the thermoplastic elastomer and the specific adhesion enhancer, heating and stirring, going through the processes of using mixer to plastify and vacuum defoaming. The gel composition has a hardness fit for adhering the tempered glass and the screen, preferably, a Rockwell hardness smaller than 10, more preferably, 2 to 10, e.g. 3, 4, 5, 6, 7, 8, 9, and has an elastic modulus is between 0.8 to 1.5 Gpa, preferably, between 1.0 to 1.4 Gpa, e.g. 1.2 Gpa. Therefore, the gel composition can be completely filled in between the tempered glass and the electronic visual display after applying the tempered glass on the electronic visual display, so as to achieve the complete adherence without any air bubbles.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are merely provided for reference and illustration, without any intention to be used for limiting the present disclosure.

### DESCRIPTION OF THE EXEMPLARY EMBODIMENTS

Reference will now be made in detail to the exemplary embodiments of the present disclosure, examples of which are illustrated in the accompanying drawings. Wherever possible, the same reference numbers are used in the drawings and the description to refer to the same or like parts. The present disclosure may be implemented or applied by various specific embodiments, and the details in this specification may be varied and modified without departing from the spirit of the present disclosure based on different views and applications. The drawings of the present disclosure are simply illustrative and are not depicted in terms of actual dimensions.

The following description will further illustrate the related technical contents of the present disclosure, and should not be construed as restricting the technical scope of the present disclosure. Where a range of values is provided, it should be understood that each intervening value between the upper and lower limit of that range and any other stated or intervening value in that stated range is encompassed within the invention. The upper and lower limits of these smaller ranges may independently be included in the smaller ranges is also encompassed within the invention, subject to any specifically excluded limit in the stated range. Where the stated range includes one or both of the limits, ranges excluding either both of those included limits are also included in the invention.

In accordance with the present disclosure, the term "gel composition" refers to a colorless and transparent composition with a Rockwell hardness smaller than 10 and an elastic modulus between 0.8 to 1.5 Gpa. The melt flow rate (MFR) of the gel composition according to the present disclosure is about from 1.0 g/10 minutes to 30 g/10 minutes at 230 □, introduced by a weight of 2.16 kg. This property can keep the gel composition in an oily gel state at operating temperatures (usually is at -10□ to 40□, more often is at 25±5□), so as to avoid the attachment defects due to the thermal expansion and contraction of the gel composition event at a dramatic temperature change. For instance, the cellphone screen may be blurry or have air bubbles thereon due to gel congealing and melting.

In some embodiments, the gel composition includes a linear block copolymer and an adhesion enhancer. The weight ratio between the linear block copolymer and the adhesion enhancer is from 1:40 to 1:50, and preferably from 1:42 to 1:48, e.g. 1:45.

Styrene-containing thermoplastic elastomers are preferably used for the linear block copolymer, such as polymers with an S-B-S (styrene-butadiene-styrene) block structure in which S is from 5% to 30% by weight of a block of polystyrene, B is from 70% to 95% by weight of a block of polybutadiene. The weight-average molecular weight (estimated by GPC) of the linear block copolymer is 5×10⁴ to 5×10⁵, preferably 7×10⁴-3×10⁵, and more preferably 8×10⁴ to 2.5×10⁵. When the weight-average molecular weight is too high, the melt flow rate of the gel composition will be too slow to have proper adherence in higher temperatures. For instance, it may not beneficial for the gel composition to adhere at high temperature ranges of 35-40 □, if the aforementioned weight-average molecular weight is too low.

In some embodiments, the content of the block of polystyrene is from 10% to 25% by weight, and preferably from 12% to 20 % by weight. In some embodiment, the content of the block of polybutadiene is from 75% to 90% by weight, and preferably from 80% to 87%. Excessive content of the block of polystyrene will cause poor adherence for the gel composition. On the other hand, if the content is too low, for example, smaller than 5 % by weight, the adherence of the gel composition would be over high, resulting in unnecessary sticky matters on the surface of the tempered glass after stripping of a peeling film on one side thereof. Therefore, whether the content of the polystyrene block is too high or too low, the adherence of gel composition will be affected, thereby being not beneficial for bonding the tempered glass and the screen.

The technology for estimating contents of various blocks among the linear block copolymer is well known in the art, for example, to estimating the contents of styrene blocks and polybutadiene blocks in polymers by using nuclear magnetic resonance (NMR). The technology for estimating the weight-average molecular weight is well known in the art as well. For instance, by gel permeation chromatography (GPC) method, the weight-average molecular weight of polystyrene can be obtained from the molecular weight calculated by the calibration curve on the basis of peaks. More specifically, the estimating conditions are exemplary described as following:
Measuring instrument: GPC HLC-8220 (Tosoh Corporation)
Column: TAK gel GMHXL Super H5000 X 1, SuperH4000 X 2(commercially available from Tosoh Corp.)
Solvent: Tetrahydrofuran
Temperature: 40□
Standard sample for calibration curve: standard sample commercially available from Tosoh Corp., for 10 measuring points.

In some embodiments, the linear block copolymer can be exemplified as styrene-butadiene-styrene (SBS), styrene-ethylene-butylene-styrene (SEBS) obtained by hydrogenating styrene-isoprene-styrene, styrene-ethylene-propylene-styrene (SEPS), and styrene-isoprene-styrene (SIS). In accordance with the present disclosure, a combination of one or more aforementioned materials can be used. When two or more aforementioned materials are used, the ratio between/among each material is not limited, as long as the gel composition obtained from combining the adhesion enhancer, could be colorless and transparent and have a Rockwell hardness smaller than 10, and an elastic modulus between 0.8-1.5 Gpa.

Furthermore, the reactive elastomeric composites given with various functional groups can be utilized in the aforementioned hydrogenated styrene-base elastomer. Examples of the said functional group include, but not limited to, a hydroxyl group, a carboxyl group, a carbonyl group, a thiocarbonyl group, an acyl halide group, an anhydride group, a thiocarboxylic acid group, a formyl group, a thioformyl group, a carboxylic ester group, an acylamino group, a sulfonic acid group, a sulfonate group, a phosphoric acid group, a phosphate group, an amino group, an imine group, a cyano group, a pyridinyl group, a quinolinyl group, an epoxy group, a thioepoxy group, a thioether group, an isocyanate group, an isothiocyanic ester, a silicon halide group, a siloxy group, a tin halide group, a boronic acid group, a boron-containing groups, a borate group, a tin alkoxides group, and a phenyl tin group.

Examples of the adhesion enhancer are preferably selected from oils, which include but are not limited to a mineral oil and a synthetic oil. Examples of the mineral oil include aromatic hydrocarbon, naphthene hydrocarbon, and paraffinic hydrocarbon. According to the present disclosure, a combination of one or more aforementioned oils can be used. Exemplarily, the adhesion enhancer is selected from at least one of the group consisting of white oil, naphthenic oil and hydrogenated naphthenic oil. The adhesion enhancer improves adherence and facilitate filling and flatting for the rough surface.

The content of the adhesion enhancer is preferably 70% to 95 %, by the total weight of the gel composition. A higher content of the adhesion enhancer could facilitate a higher adherence However, excessive adhesion enhancer may cause bleeding or even outflow of the gel composition. Hence, the content thereof should be smaller than 95%, and preferably is lower than 90%, 85% or 80%. On the other hand, in order to ensure enough adherence, the content of the adhesion enhancer has to be greater than 70%, and preferably larger than 75%.

In some embodiments, the gel composition further includes butadiene units, so as to improve the mechanical strength thereof. The butadiene units can be obtained by introducing a specific amount of butadiene monomer into the gel composition and mixing them during the reaction process. The content of the introduced butadiene unit has to be controlled under 10%, by the total weight of the gel composition. The excessive butadiene added into the gel composition may cause the gel composition to be too hard, and may enlarge the brittleness thereof, which is not beneficial for adhering, especially when the operating temperature changes. On the contrary, the introduced amount of butadiene being too low may result in poor mechanical strength. Once operating under the hot environment (e.g. about 40 □), the bleeding or outflow of the gel composition may occur.

In some embodiments, the gel composition further includes an additive, so as to provide other properties required by the gel composition. Examples of additive can be an antioxidant and/or an anti-ultraviolet agent, so as to improve the durability of the gel composition.

Examples of the antioxidant include but are not limited to hindered phenols-base antioxidants such as 2,6-Di-tert-butyl-4-methylphenol, Octadecyl 3,5-di-t-butyl-4-hydroxyhydrocinnamate, 2,2'-Methylenebis(6-tert-butyl-4-methylphenol), 2,2'-Methylenebis(6-tert-butyl-4-ethylphenol), 2-Methyl-4,6-bis(octylsulfanylmethyl)phenol, 2,2'-Methylenebis(4-methyl-6-tert-butyl phenol)monoacrylate, 2,4-di-test-butylphenyl-6-[1-(3,5-di-test-butyl-2-hydroxyphenol)ethyl]phenyl acrylate, and 2-[1-(2-hydroxy-3,5-di-tert-pentylphenyl)]acrylate, etc.; thio-base antioxidants such as Distearyl thiodipropionate, Dilauryl thiodipropionate and 2,2-Bis[[3-(dodecylthio)-1-oxopropoxy]methyl]propane-1,3-diyl bis[3-(dodecylthio)propionate], etc.; phosphate-base antioxidants such as tris(nonylphenyl) phosphite and tris(2,4-ditert-butylphenyl) phosphite.

Examples of the anti-ultraviolet agent include but are not limited to benzotriazole-base anti-ultraviolet agents such as 2-(2'-hydroxy-5'-methylphenyl) benzotriazole, 2-(2'-Hydroxy-3'-sec-butyl-5'-tert-butylphenyl)benzotriazole, 2-(2'-Hydroxy-3',5'-di-tert-butylphenyl)-5-chlorobenzotriazole; benzophenone-base anti-ultraviolet agents such as 2-Hydroxy-4-methoxybenzophenone; or hindered amines light stabilizers.

In addition, various additives can be added into the gel composition of the present disclosure according to practical needs. The said additives can include but are not limited to, pigments such as iron oxide red, titanium dioxide; waxes such as solid paraffin, microcrystalline wax, low molecular weight polyethylene wax; polyolefine-base such as the amorphous polyolefine ethylene-ethyl acrylate or low molecular weight of ethenyl aromatic thermoplastic resin; natural rubbers; synthetic rubbers such as polyisoprene rubber, polybutadiene rubber, styrene-butadiene rubber, ethylene propylene rubber, neoprene rubber, acrylic polymer rubber, isoprene butadiene-isobutylene rubber, polypentenamer rubber.

The manufacturing method of the gel composition of the present disclosure can be selected from well-known techniques, but is not limited thereto. The mixer can be any conventional mixer, such as a Banbury mixer, a single screw extruder, a twin-screw extruder, a screw kneader and a multispindle screw machine, etc. for the melt-mixing step. Afterwards, the dissolved or dispersed components can be coated on membrane by a coating machine or the like, followed by removing the solvent by heating.

More specifically, the manufacturing method of the present disclosure includes: a step of mixing the linear block copolymer and the adhesion enhancer, a step of heating and stirring, a step of operating the mixer to plastify and a step of vacuum defoaming. More specifically, the temperatures for the step of heating and stirring and the step of using the mixer to plastify can be between 100-300 □. And the temperatures for the step of vacuum defoaming can be between 60-200□.

In accordance with the present disclosure, the term "tempered glass protective film" refers to a protective film attached on the screen surface of a cell phone. Preferably, it refers to the protective film that could be completely attached to the whole screen of the cell phone, and more preferably, to the protective film that fits to the curved screen.

In some embodiments, the tempered glass protective film includes a tempered glass and a gel layer. Further, the thickness of the tempered glass is 200-400 µm, and the thickness of the gel layer is 5-100µm, and preferably 10-50 µm.

In some embodiments, the tempered glass protective film includes the tempered glass, the gel layer and other functional layers. Preferably, the functional layers are disposed between the tempered glass and the gel layer. Examples of the functional layers include an organosilicon pressure-sensitive adhesive of which the thickness is 5-100 µm.

In some embodiments, the tempered glass protective film further includes a peeling layer and/or a protective film. The thickness of the peeling layer and/or the protective film is 100-400µm.

The manufacturing method of the tempered glass protective film of the present disclosure can be well-known techniques, but are not limited thereto. For instance, the tempered glass protective film can be manufactured by following steps:
providing a PET substrate with a thickness of 200-400 µm, then performing hot-pressing and compression molding, afterwards, forming radian on edges then removing the central portion, wherein the central portion of the PET substrate is a tempered glass, and the thickness of the tempered glass is equal to that of the PET substrate, being 200-400µm;
bonding the two substrates with epoxy resin AB adhesive, especially for the tempered glass;
disposing the organosilicon pressure-sensitive adhesive on the tempered glass, the gel layer of the present disclosure being disposed under the tempered glass.

The final product can be provided with the protective film and the peeling layer which are respectively disposed on the top and bottom thereof. The protective film is a PET layer (38-100µm), and the organosilicon pressure-sensitive adhesive layer of 5-20µm is disposed under the protective film; the peeling layer is a PET film or a releasing film with a thickness of 23-100µm, and the peeling layer is disposed on the gel layer disposed below the tempered glass.

It should be noted that the protective film protects the tempered glass and the peeling layer protects the AB pressure-sensitive adhesive layer when the products are sold. The protective film and the peeling layer will be stripped off afterwards when used.

The peeling layer is stripped off to allow the AB pressure-sensitive adhesive layer to be attached on the products, and then the protective film is stripped off as the protecting membrane for the device.

The method used for coating the materials, such as a tempered glass, of the present disclosure can be any well-known method in the art. For instance, the solution or the melting state of the composition can be coated on the substrate by film extruders.

The method for melting and coating the composition of the present disclosure can include, but is not limited to, a step of coating the melted composition on the substrate (e.g. tempered glass) by a hot melt coater.

### Embodiment 1

### Mixing the following materials:

SIS elastomer (equivalents weight-average molecular weight of the polystyrene is 100,000, commercially available from DEXCO Polymers, Houston, Texas, the content of blocks of styrene is 8% by weight, the content of blocks of alkadienes is 92% by weight), 3 kg.

White oil, (commercially available from FWUDAWUZIHSHIHUA Corp. Hang-Zhou, China), 95kg.
Butadiene monomer 1 kg;
Antioxidant 0.5 kg;
Anti-ultraviolet agent 0.5 kg.

Heating and stirring to 100°C, and operating the mixer to plastify for 10 hours, afterwards, annealing to 60°C to perform vacuum defoaming for 5 hours, then cooling to room temperature, so as to obtain the gel composition 1. Rockwell hardness of the gel composition 1 is 8, and the elastic modulus thereof is 0.8.

### Embodiment 2

### Mixing the following materials:

SBS elastomer (equivalents weight-average molecular weight of the polystyrene is 75,000, commercially available from DEXCO Polymers, Houston, Texas, the content of blocks of styrene is 10.2 % by weight, the content of blocks of alkadienes is 89.9% by weight), 20 kg;

Naphthenic oil (commercially available from FWUDAWUZIHSHIHUA Corp. Hang-Zhou, China), 70 kg;
Butadiene unit for 5 kg;
Antioxidant 2.5 kg;
Anti-ultraviolet agent, 2.5 kg.

Heating to 300°C and stirring, operating the mixer to plastify for 8 hours, afterwards, annealing to 200°C to perform vacuum defoaming for 4 hours, then cooling to room temperature, so as to obtain the gel composition 2. Rockwell hardness of the gel composition 2 is 9, and the elastic modulus thereof is 9.5.

### Embodiment 3

### Mixing the following materials:

SEBS elastomer (equivalents weight-average molecular weight of the polystyrene is 198,000, commercially available from DEXCO Polymers, Houston, Texas, the content of blocks of styrene is 25.2 % by weight, the content of blocks of alkadienes is 74.8% by weight), 12 kg

Hydrogenated naphthenic oil (commercially available from FWUDAWUZIHSHIHUA Corp. Hang-Zhou, China): 78 kg;
Butadiene: 6 kg;
Antioxidant, 1.5 kg;
Anti-ultraviolet agent, 2.5 kg.

Heating to 150°C and stirring, operating the mixer to plastify for 8 hours, afterwards, annealing to 130°C to perform vacuum defoaming for 2 hours, than cooling to environmental temperature, so as to obtain the gel composition 3. Rockwell hardness of the gel composition 2 is 10, and the elastic modulus thereof is 1.2.

In accordance with the above embodiments, firstly, the stirring step is performed in the heating mixer to melt oil and to completely mix with the thermoplastic copolymer, then the plastify step is performed through twin screw extruders, and finally the step of vacuum defoaming is performed by vacuum foam machine.

### Comparison example 1

The preparation for manufacturing the comparison composition 1 is substantially the same as that for the embodiment 1, except that the SIS elastomer of the present example 1 is modified to have the following properties.

SIS elastomer: equivalents weight-average molecular weight of the polystyrene is 120,000, commercially available from DEXCO Polymers, Houston, Texas, the content of blocks of styrene is 3% by weight, and the content of blocks of alkadienes is 97% by weight).

### Comparison example 2

The preparation for manufacturing the comparison composition 2 is substantially the same as that for the embodiment 2, except that the elastomer of the present example 2 is modified to have the following properties.

SIS elastomer: equivalents weight-average molecular weight of the polystyrene is 74,000, commercially available from DEXCO Polymers, Houston, Texas, the content of blocks of styrene is 35% by weight, and the content of blocks of alkadienes is 65% by weight).

### Comparison example 3

The preparation for manufacturing the comparison composition 3 is substantially the same as that for the embodiment 1, except without using the white oil.

### Embodiment 4

The tempered glass protective film is manufactured by using the gel composition of the present disclosure and comparison composition, as the following steps:

The steps of manufacturing method of the tempered glass protective film:
S1: providing a hot-bending tempered glass matching the shape of the electronic visual display, pressing the gel composition of the present disclosure and the hot-bending tempered glass together to adhere each other through a molding device that matches the shape of the electronic visual display, so as to form a gel layer with a thickness of 5-50 µm inside the hot-bending tempered glass;
S2: heating the gel composition and hot-bending the tempered glass under 100-300°C and keeping in a constant pressure for 1-30 seconds, so as to melt the gel for filling the rough surface inside the hot-bending tempered glass;
S3: after filling, performing cooling.

The following reviews are performed to estimate the adherence (fissility and sealing ability) of the protective film manufactured by aforementioned methods.

### Fissility rating:

The protective film including gel composition 1-6 of the present disclosure are respectively adhered to the cell phone screens with curved display size 3.7 inches. After complete adherence, the cell phones are placed uprightly and motionlessly in a testing environment for 3 days at 25°C and a relative humidity of 50%. Then, the protective film is stripped off to evaluate the remaining state of the gel composition on the screens. The evaluations for the gel compositions are marked with ○, △ and ×, respectively representing:
○: very easily stripped off, with 0-1 observable spots remaining.
△: easily stripped off, with 2-4 observable spots remaining.
×: not easily stripped off, with more than 5 observable spots remaining.

### Sealing ability rating:

Under a relative humidity of 50% and conditions shown in Table 1, for the 3.7-inches cell phone curved screen, the area ratio of the close portion and the void portion (bubble) is calculated as an indicator of the sealing ability, and bubbles are evaluated visually, especially at the curved portion. The evaluation for the sealing abilities are marked with Ⓞ, ○, △ and ×, respectively representing:
⊚: absolutely no observable bubbles.
○: number of observable bubble is 1.
△: number of observable bubbles is 2-4.
×: number of observable bubbles is above 5.

**Table 1**

| | | **Protective film 1** | **Protective film 2** | **Protective film 3** | **Protective film 4** | **Protective film 5** | **Protective film 6** |
|---|---|---|---|---|---|---|---|
| Compositions | | Gel composition 1 | Gel composition 2 | Gel composition 3 | Comparison composition 1 | Comparison composition 2 | Comparison composition 3 |
| Fissility | | ○ | ○ | ○ | × | Δ | × |
| Sealing ability | placed for 24 hours at -5□ | ⊚ | ⊚ | ⊚ | × | × | × |
| | placed for 24 hours at 25□ | ⊚ | ⊚ | ⊚ | Δ | Δ | × |
| | performing a temperature cycle from -5 °C to 25 °C , then to -5 °C , and circling 50 times (2 hours for each cycle) | ○ | ⊚ | ⊚ | × | × | × |

The descriptions illustrated *supra* set forth simply the preferred embodiments of the present disclosure; however, the characteristics of the present disclosure are by no means restricted thereto. All changes, alterations, or modifications conveniently considered by those skilled in the art are deemed to be encompassed within the scope of the present invention delineated by the following claims.

## Claims

1. A gel composition for bonding a tempered glass to an electronic visual display, comprising a linear block copolymer and an adhesion enhancer;
wherein the weight-average molecular weight of the linear block copolymer is 5×10⁴ to 5×10⁵; the linear block copolymer has a styrene-butadiene-styrene (SBS) block structure, wherein S is from 5% to 30% by weight of a block of polystyrene, B is from 70% to 95% by weight of a block of polybutadiene; the weight ratio between the linear block copolymer and the adhesion enhancer is from 1:40 to 1:50; and
wherein, a Rockwell hardness of the gel composition is smaller than 10, and an elastic modulus thereof is from 0.8 to 1.5. Gpa.

2. The gel composition according to claim 1, wherein the linear block copolymer is selected from at least one of a group consisting of SIS, SBS, SEBS and SEPS, and/or the adhesion enhancer is selected from at least one of a group consisting of white oil, naphthenic oil and hydrogenated naphthenic oil.

3. The gel composition according to claim 1, further including a butadiene unit and an additive.

4. The gel composition according to claim 3, wherein the additive is an antioxidant and/or an anti-ultraviolet agent.

5. The gel composition according to claim 1, wherein a mass percentage of the linear block copolymer is from 3% to 20%, a mass percentage of the adhesion enhancer is from 70% to 95%.

6. A manufacturing method of a gel composition according to claim 1, comprising a step of mixing the linear block copolymer and the adhesion enhancer, a step of heating and stirring, a step of operating a mixer to plastify and a step of vacuum defoaming.

7. A tempered glass protective film, comprising a tempered glass and a gel layer, wherein the gel layer is composed of the gel composition according to claim 1.

8. The tempered glass according to claim 7, wherein the gel layer is directly coated on the surface of the tempered glass, or a functional layer is disposed between the gel layer and the tempered glass, wherein the function layer is an organosilicon pressure-sensitive adhesive layer.

9. The tempered glass protective film according to claim 7, further including a peeling layer and/or a protective film.
